# FASCICULE DE BREVET EUROPEEN

(11) **EP 0 568 420 B1**
(45) Date de publication et mention de la délivrance du brevet: **23.08.1995**
(21) Numéro de dépôt: 93401051.3
(22) Date de dépôt: 22.04.1993
(51) Int. Cl.: G05B 19/04

(54) **Interface programmable notamment pour la commande d'installations domestiques**
Programmierbares Interface, insbesondere für die Steuerung häuslicher Anlagen
Programmable interface, especially for control of domestic appliances

(30) Priorité: 30.04.1992 FR 9205423
(43) Date de publication de la demande: 03.11.1993
(73) Titulaire: SGS-THOMSON MICROELECTRONICS S.A., 94250 Gentilly (FR)
(72) Inventeur: Le Van Suu, Maurice, F-75116 Paris (FR)
(74) Mandataire: Schmit, Christian Norbert Marie

(56) Documents cités:
- EP-A- 0 175 657
- EP-A- 0 257 776
- EP-A- 0 301 736
- PATENT ABSTRACTS OF JAPAN vol. 9, no. 79 (P-347)(1802) 27 Novembre 1984 & JP-A-59 208 603 (HITACHI SEISAKUSHO) 13 Mai 1983

## Description

La présente invention concerne une interface programmable destinée à recevoir sur N ports d'entrée des informations provenant de N supports d'entrée distincts de transmission d'information, ou provenant d'un même support à N entrées distinctes.

L'invention trouve une application particulièrement avantageuse dans le domaine de la domotique, c'est à dire la gestion d'information des installations domestiques.

Les dispositifs de domotique connus utilisent en général cinq types de supports de transmission d'information distincts, voire plus, permettant de fournir auxdits dispositifs les informations provenant des divers appareils de l'installation domestique à gérer et susceptibles d'en modifier l'état de fonctionnement, à savoir la mise en marche, l'arrêt, etc... Ces cinq supports de transmission d'information sont le courant porteur, les paires torsadées, le rayonnement infrarouge, les câbles coaxiaux et la fréquence radio par voie hertzienne; ils peuvent être également la fibre optique, la transmission par ultrasons ou autres.

Pour chaque support de transmission d'information, les informations numérisées se présentent sous la forme de mots comprenant une succession de bits dont la durée est fonction du support considéré. A titre d'exemple, pour la transmission par courant porteur relativement sensible au bruit, la durée d'un bit peut être de 416 »s (qui correspond à 2400 bauds) ou 832 »s (qui correspond à 1200 bauds voire plus dans le futur), alors que pour les autres supports de transmission d'information moins sensibles au bruit, elle peut être de l'ordre de 104 »s voir moins (9600 bauds à 1 Megabit pour les paires torsadées ou la fibre optique).

D'autre part, le fonctionnement de ces dispositifs connus implique habituellement l'utilisation de cinq contrôleurs de bit d'entrée dont la fonction est de s'assurer que les informations numérisées reçus par un support d'entrée donné comportent bien des bits dont la durée correspond à la durée caractéristique de bit pour le support considéré. De façon pratique, ces contrôleurs de bit sont le plus souvent réalisés en logique câblée, et, dans un mode de fonctionnement prédéterminé ou fixé, leur déclenchement se produit sur le front de montant ou descendant du signal, le front complémentaire étant détecté à travers une fenêtre d'observation ouverte autour de la position attendue pour ledit front complémentaire.

Les dispositifs connus qui viennent d'être décrits présentent donc l'inconvénient d'exiger un contrôleur de bit pour chaque type de support de transmission d'information, ce qui en alourdit considérablement la réalisation.

Aussi, le problème technique à résoudre par l'objet de la présente invention est de proposer une interface programmable conforme au préambule qui permettrait d'utiliser un seul contrôleur de bit pour, au moins, les N supports d'entrée de transmission d'information.

La solution au problème technique posé consiste, selon la présente invention, en ce que la dite interface programmable comprend, au moins :
- un circuit d'identification apte à recevoir les dites informations venant desdits N ports d'entrée, et à fournir N signaux d'identification distincts caractéristiques desdits supports d'entrée,
- au moins un circuit de réception desdites informations, comprenant un contrôleur de bit d'entrée programmable,
- un microprocesseur ou circuit spécialisé apte à recevoir, d'une part, lesdits signaux d'identification provenant du circuit d'identification et, d'autre part, les informations provenant du circuit de réception, ledit microprocesseur étant également apte à commander des moyens de programmation fournissant audit contrôleur de bit d'entrée programmable des paramètres de contrôle de bit ou de trame caractéristiques des dits supports d'entrée.

Ainsi, l'interface programmable de l'invention peut n' utiliser qu'un seul contrôleur de bit d'entrée, compatible avec tous les supports d'entrée de transmission d'information qu'elle qu'en soit la nature physique. Ce caractère d'universalité de fonctionnement provient du fait que le microprocesseur, ayant reçu du circuit d'identification une indication concernant la nature du support d'entrée par lequel une information est parvenue, fournit par l'intermédiaire des moyens de programmation les paramètres de contrôle de bit caractéristiques du support d'entrée utilisé.

Les moyens de programmation commandés par le microprocesseur peuvent être de type analogique ou numérique, par exemple des circuits RC qui définissent des paramètres temporels de contrôle de bit dont les valeurs sont ajustées par le microprocesseur par modification de la valeur des capacités, ou des valeurs d'un compteur.

Toutefois, dans un mode de réalisation préférée de l'interface programmable conforme à l'invention, il est prévu que lesdits moyens de programmation comprennent un registre de contrôle comportant N zones-mémoire contenant lesdits paramètres de contrôle de bit caractéristiques desdits supports de transmission d'information, et ledit registre de contrôle étant apte à recevoir dudit microprocesseur N signaux de sélection desdites zones-mémoire et à fournir audit contrôleur de bit d'entrée programmable lesdits paramètres de contrôle de bit, de trame ou de format.

Par ailleurs, l'invention prévoit aussi un circuit d'émission d'ordres de commande ou d'informations fournis par le microprocesseur comprenant un contrôleur de bit de sortie programmable destiné à contrôler que les bits desdits ordres de commande délivrés par le microprocesseur sont conformes aux supports de sortie par lesquels ils doivent être émis. Dans ce cas, ledit registre de contrôle est également apte à fournir au contrôleur de bit de sortie programmable les dits paramètres de contrôle de bit, de contrôle de trame, et plus généralement de contrôle de format (dit encore symbole ou champ).

Il est bien entendu qu'avec un seul circuit de réception, l'interface programmable selon l'invention ne peut traiter que les informations provenant d'un seul port d'entrée correspondant à un support d'entrée donné. Aussi, afin de permettre le traitement simultané des N ports d'entrée, il est prévu, selon l'invention, que la dite interface comprend N circuits de réception parallèles identiques, reliés aux N ports d'entrée par un multiplexeur à N voies.

La description qui va suivre en regard des dessins annexés, donnés à titre d'exemples non limitatifs, fera bien comprendre en quoi consiste l'invention et comment elle peut-être réalisée.

La figure 1 est le schéma d'un premier mode de réalisation d'une interface programmable conforme à l'invention.

La figure 2 est le schéma d'un circuit d'identification de l'interface programmable de la figure 1.

La figure 3 est le schéma d'un contrôleur de bit d'entrée programmable de l'interface programmable de la figure 1.

La figure 4 est le schéma d'un circuit de validation du contrôleur de bit d'entrée programmable de la figure 3.

La figure 5 est le schéma d'un deuxième mode de réalisation d'une interface programmable conforme à l'invention.

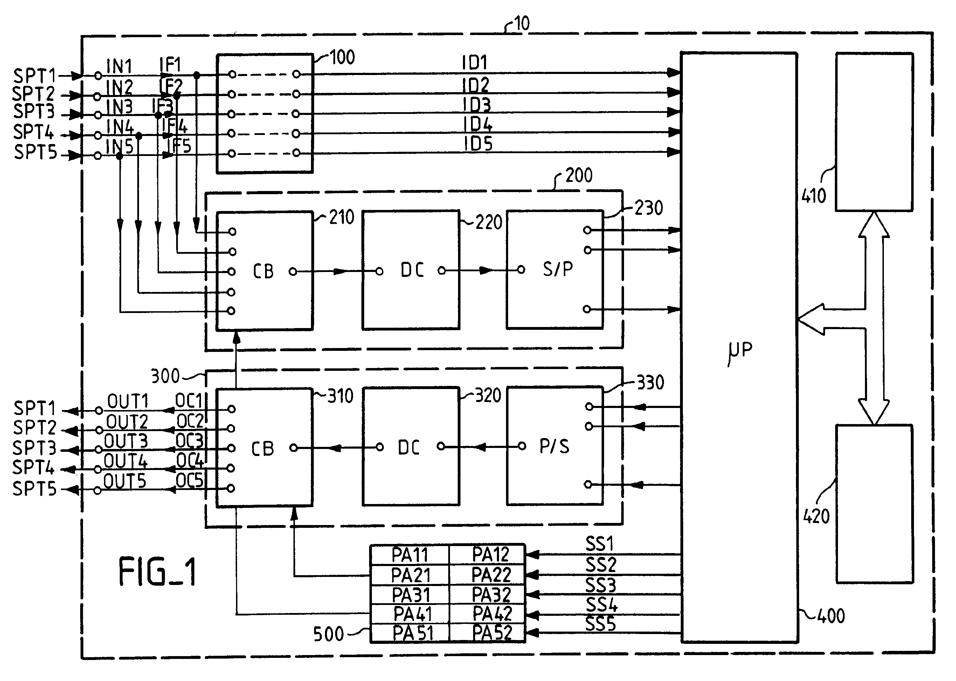

La figure 1 montre de manière schématique une interface programmable 10 destinée à recevoir sur N=5 ports d'entrée IN1, IN2, ..., IN5, soit INj avec j = 1, 2, ..., 5, des informations IFj provenant de N=5 supports d'entrée de transmission d'information SPT1, SPT2, ..., SPT5 distincts. Ces supports de transmission d'information peuvent être, de façon non limitative, le courant porteur, une paire torsadée, le rayonnement infrarouge, un câble coaxial ou une fréquence radio. Dans une installation domestique, les informations IFj reçues par l'interface programmable sont constituées, soit par des indications relatives au fonctionnement de certains appareils, une température par exemple, soit par des instructions fournies par l'utilisateur ou programmée, susceptibles de modifier l'état de fonctionnement de certains autres, tels que des instructions de mise en marche ou d'arrêt, etc...

En réponse à ces informations d'entrée, l'interface programmable 10 émet des ordres de commande effectifs OCk (k= 1,2,...,N) aux divers appareils, par exemple l'ordre de mise en marche d'une chaudière après qu'une diminution de la température ou encore l'ordre de mise en marche programmée d'un four ou d'une table de cuisson.

Lesdits ordres de commande sont émis par N ports de sortie OUTk sur N supports SPTk de sortie de transmission d'information, de même nature que les N supports SPTj d'entrée. La figure 1 montre des ports d'entrée INj et des ports de sortie OUTk différents, mais il est bien entendu que ces divers ports peuvent être confondus, de même que les supports d'entrée SPTj et de sortie SPTK de transmission d'information.

Comme l'indique le schéma de la figure 1, l'interface programmable 10 de l'invention comprend un circuit 100 d'identification apte à recevoir lesdites informations IFj venant desdits ports d'entrée INj, et à fournir N signaux d'identification IDj distincts caractéristiques desdits supports d'entrée SPTj.

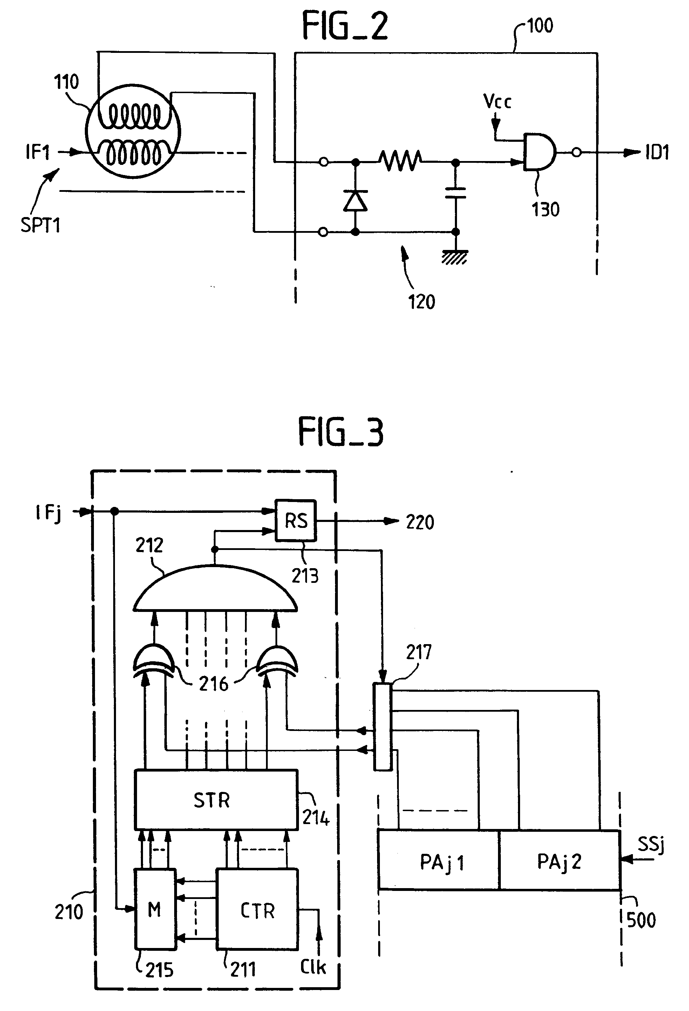

A titre d'exemple, la figure 2 donne le schéma de la voie du circuit d'identification 100 affectée aux informations IF1 véhiculée par courant porteur, un tel support étant pris comme support d'entrée SPT1 avec j=1. Le signal d'information modulé en fréquence ou en amplitude, prélevé sur la ligne réseau secteur (courant porteur) par un transformateur 110 est redressé à une alternance ou non, et filtré et démodulé par le circuit 120. Le signal délivré par le circuit 120 est appliqué à une borne d'entrée d'une porte ET dont une autre borne reçoit une tension continue Vcc (d'autorisation de traitement en provenance d'un bloc 400). En l'absence de toute information IF1 sur le courant porteur SPT1, le signal d'identification ID1 sera 0, tandis qu'on en présence d'une information IF1 ce signal d'identification sera égal à 1. Il est de même pour toutes les autres voies du circuit d'identification 100 associées aux autres supports d'entrée de transmission d'information.

La figure 1 montre également que l'interface programmable 10 comprend un circuit de réception 200 des dites informations IFj. Ainsi qu'on peut le voir sur la figure 1, ce circuit de réception 200 comporte un contrôleur de bit d'entrée 210 destiné à vérifier que les bits provenant d'un support d'entrée SPTj donné ont la longueur attendue pour ce support, à savoir 416 ou 832 »s pour le courant porteur et 104 »s pour les autres supports de transmission d'information.

Le contrôleur de bit 210 est suivi par un circuit de détection de collision 220 dont la fonction est d'éviter la superposition de deux informations provenant d'un même support d'entrée SPTj. De façon classique, le détecteur de collision 220 peut comporter une porte ET qui, en cas de superposition, délivre un 1 logique en sortie. La détection de ce signal de sortie non nul révèle la présence d'une collision et annule la séquence en cours, en fonction de la stratégie définie par l'utilisation.

Comme on peut le voir sur la figure 1, la sortie du circuit de détection de collision 220 est connectée à l'entrée d'un registre série-parallèle 230 destiné à transformer les bits arrivant en série en autant de voies parallèles que de bits composant les informations IFj. Ce registre 230 comprend un nombre de positions-mémoire égal au nombre de bits. En fonctionnement, lesdites positions-mémoire du registre 230 se remplissent successivement au rythme de la fréquence des signaux binaires, puis se vident simultanément après remplissage de toutes les positions-mémoire.

On peut voir sur la figure 1 que l'interface programmable 10 de l'invention comprend un microprocesseur 400 ou circuit spécialisé, muni de ses mémoires de données 410 et de programmes 420, apte à recevoir, d'une part, les signaux d'identification IDj provenant du circuit d'identification 100, et, d'autre part, les informations IFj provenant du circuit de réception 200, via le contrôleur de bit d'entrée 210, le circuit de détection de collision 220 et le registre série-parallèle 230. On ne décrit ici que les signaux de contrôle de bit, étant entendu que les contrôles de trame et de format sont exactement identiques dans leur principe.

Par ailleurs, le microprocesseur 400 est également apte à fournir lesdits signaux de commande OCk par l'intermédiaire d'un circuit d'émission 300 relié aux N ports de sortie OUTk, et à commander des moyens 500 de programmation fournissant au contrôleur de bit d'entrée 210 des paramètres de contrôle de bit caractéristiques des supports d'entrée SPTj de transmission d'information.

Dans le mode de réalisation représenté à la figure 1, lesdits moyens de programmation comprennent un registre de contrôle 500 comportant N zones-mémoire contenant des paramètres de contrôle de bits, caractéristiques desdits supports d'entrée SPTj. Lorsque le contrôleur de bit d'entrée 210 est déclenché en début de bit, ces paramètres de contrôle de bit peuvent être, par exemple, deux mots binaires PAj1, PAj2 définissant une fenêtre temporelle de contrôle de fin de bit associée à chacun desdits supports de transmission d'information. D'autre part, le registre de contrôle 500 est prévu pour recevoir du microprocesseur 400 N signaux de sélection SSj desdites zones-mémoire pour fournir au contrôleur de bit d'entrée 210 lesdits paramètres de contrôle du bit qui lui sont nécessaires pour effectuer son contrôle.

Le schéma de la figure 3 rend compte du fonctionnement d'un contrôleur de bit d'entrée 210 d'une interface programmable 10 conforme à l'invention. Lorsqu'une information IFj empruntant le Jème support d'entrée SPTj est appliquée au port d'entrée INj, un signal d'identification IDj fourni par le circuit d'identification 100 parvient au microprocesseur 400, lequel en fonction de l'information qu'il reçoit détermine l'ordre de commande OCk à émettre et le support de sortie SPTk correspondant.

Le microprocesseur 400 délivre alors un signal de sélection SSj associé au support d'entrée SPTj sollicité pour charger dans le registre de contrôle 500 la zone-mémoire correspondante dont le contenu, à savoir les paramètres de fin de bit PAj1 et PAj2 et autres relatifs à la trame, sont fournis au contrôleur de bit d'entrée 210. Le registre de contrôle peut en principe être une zone mémoire de grande taille comportant par exemple plusieurs mots de 8, 16 ou 32 bits pour convenir à ce contrôle complexe. Le contrôleur 210 comprend, par exemple, un compteur 211 commandé par une horloge CLK. L'état du compteur 211 est transmis en permanence à une mémoire 215 qui est verrouillée sur le front de montée, ou de descente selon la logique choisie, du signal à étudier, c'est à dire l'information IFj. L'état du compteur ainsi mémorisé dans la mémoire 215 est soustrait de l'état courant du compteur 211 par un soustracteur 214, l'ensemble formé par la mémoire 215 et le soustracteur 214 constituant un dispositif de remise à zéro du compteur 211, synchrone avec le front de montée ou de descente du signal à étudier.

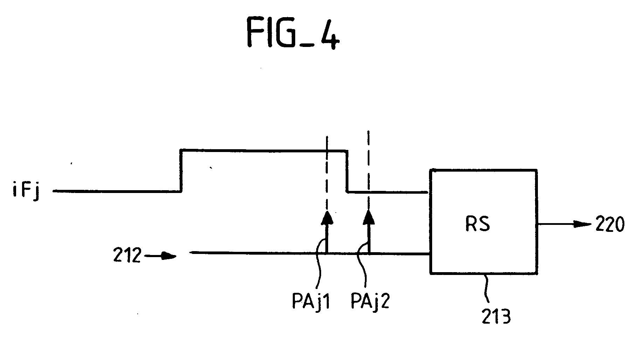

Les paramètres de contrôle PAj1 et PAj2 ont, dans ce cas, une durée inférieure, respectivement supérieure, à la durée de bit caractéristique du support d'entrée SPTj. Chaque bit de ces deux mots binaires est appliqué à une entrée d'une porte OU exclusif 216 qui reçoit également par une autre entrée le bit correspondant venant du soustracteur 214. L'ensemble des sorties des portes ou exclusif 216 est appliqué à un poste ET 212 dont le signal de sortie, montré sur la figure 4, est une fenêtre temporelle définie par les deux paramètres de contrôle PAj1 et PAj2. De façon à détecter si le front montant ou descendant du signal IFj se produit entre les instants PAj1 et PAj2, le signal IFj est appliqué à une borne d'entrée d'une bascule RS ou JK 213 sensible à un chargement d'état dans la fenêtre temporelle issue de la porte ET 212 et appliquée à l'entrée de validation de la bascule 213. Si le front descendant ou montant du signal se produit pendant l'ouverture de la fenêtre, le signal de sortie de la bascule 213 passe de 0 à 1 ou inversement, sinon elle reste à 0 ou à 1.

On comprend que, du fait de la programmation réalisée par le microprocesseur 400 et les moyens de programmation 500, le contrôleur de bit de sortie 210 de la figure 3 a un caractère universel puisqu'il peut être utilisé pour tous les types de supports de transmission d'information possibles. Il suffit pour cela de lui fournir les paramètres de contrôle de bit du support considéré.

On peut observer sur la figure 1 que le circuit d'émission 300, chargé de transmettre les ordres de commande OCk aux supports de sortie SPTk par les ports de sortie OUTk, comprend un registre parallèle-série 330 suivi d'un circuit détecteur de collision 320 et d'un contrôleur de bit de sortie 310. Ce contrôleur de bit de sortie peut être du même type programmable que le contrôleur de bit d'entrée 210 décrit en détail plus haut. Le microprocesseur 400 pointe à l'aide d'un signal de sélection SSk la zone-mémoire contenant les paramètres de contrôle de bit PAk1 et PAk2 correspondants au support de sortie SPTk. Ces paramètres de contrôle sont alors fournis au contrôleur de bit de sortie 210 programmable dont le fonctionnement est identique au contrôleur de bit d'entrée 210.

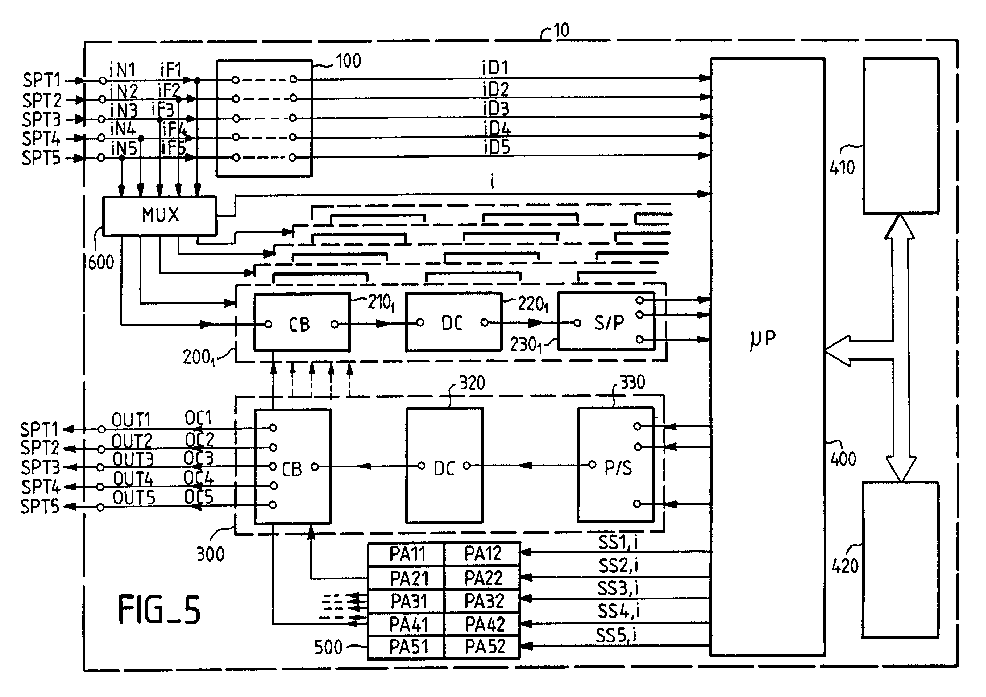

De manière à pouvoir traiter simultanément des informations provenant de supports d'entrée SPTj de transmission d'information différents, il est prévu le mode de réalisation représenté sur la figure 5. Dans ce mode de réalisation, l'interface programmable 10 comprend N circuits de réception 200i (i = 1,2,...,N) parallèles identiques, reliés aux N ports d'entrée INj par un multiplexeur 600. Ainsi, au fur et à mesure de l'arrivée des informations IFj provenant des supports d'entrée SPTj, le multiplexeur adresse ces informations dans des circuits de réception d'indice i donné, lequel est transmis au microprocesseur 400 en corrélation avec le signal d'identification IDj correspondant au support d'entrée SPTj de l'information IFj.

Le microprocesseur 400 délivre alors un signal de sélection SSj accompagné de l'indice i de circuit de réception 200i associé, de manière à fournir les paramètres de contrôle PAj1 et PAj2 au contrôleur de bit d'entrée 210i du circuit de réception 200i auquel aura été adressée par le multiplexeur 600 l'information IFj provenant du support d'entrée SPTj.

## Revendications

1. Interface programmable (10) destinée à recevoir sur N ports d'entrée (INj,J-1,2,...,N) des informations (IFj) provenant de N supports (SPTj) d'entrée distincts de transmission d'information, chaque support d'entrée étant notamment caractérisé par une vitesse de transmission, caractérisée en ce que la dite interface programmable (10) comprend, au moins :
- un circuit (100) d'identification apte à recevoir les dites informations (IFj) venant des dits N ports d'entrée (INj), et à fournir N signaux d'identification (IDj) distincts caractéristiques des dits supports d'entrée,
- au moins un circuit de réception (200) des dites informations (IFj), comprenant un contrôleur de bit d'entrée (210) programmable, pour contrôler les vitesses de transmission des dites informations,
- un microprocesseur (400) ou circuit spécialisé apte à recevoir, d'une part, les dits signaux d'identification (IDj) provenant du circuit d'identification (100), et, d'autre part, les informations (IFj) provenant du circuit de réception (200), le dit microprocesseur (400) commandant des moyens (500) de programmation fournissant au dit contrôleur de bit d'entrée (210) programmable des paramètres de contrôle de bit (PAj1, PAj2) ou de trame caractéristiques des dits supports d'entrée (STPj).

2. Interface programmable selon la revendication 1, caractérisée en ce que les dits moyens de programmation comprennent une mémoire de contrôle (500) comportant N zones-mémoire contenant les dits paramètres de contrôle de bit (PAj1, PAj2) caractéristiques des dits supports (SPTj, SPTk) de transmission d'information, et la dite mémoire de contrôle (500) étant apte à recevoir du dit microprocesseur (400) N signaux de sélection (SSj) des dites zones-mémoire et à fournir au dit contrôleur de bit d'entrée (210) programmable les dits paramètres de contrôle de bit ou de trame.

3. Interface programmable selon l'une des revendications 1 ou 2, caractérisée en ce que la dite interface comporte également un circuit d'émission (300) d'ordre de commande (OCK) fournis par le microprocesseur (400) comprenant un contrôleur de bit de sortie (510) programmable.

4. Interface programmable selon les revendications 2 et 3, caractérisée en ce que la dite mémoire de contrôle (500) est également apte à fournir au contrôleur de bit de sortie (310) programmable les dits paramètres (PAk1, PAk2) de contrôle de bit.

5. Interface programmable selon l'une des revendications 2 ou 4, caractérisée en ce que les dits paramètres de contrôle de bit sont deux mots binaires (PAj1, PAj2, PAk1, PAk2) définissant une fenêtre temporelle de contrôle de fin de bit associée à chacun des dits supports de transmission d'information.

6. Interface programmable selon l'une quelconque des revendications 1 à 5, caractérisé en ce que les dits circuits de réception (200) et d'émission (300) comporte, chacun, un circuit de détection de collision (230, 330).

7. Interface programmable selon l'une quelconque des revendications 1 à 6, caractérisée en ce que la dite interface comprend N circuits de réception (200i, i=1,2,..,N), reliés aux N ports d'entrée (INj) par un multiplexeur (600) à N voies.

## Patentansprüche

1. Programmierbares Interface (10), das an N IN-Ports (INj, J-1,2,...,N) Informationen (IFj) empfangen soll, die von N unterschiedlichen IN-Informationsübertragungssupports (SPTj) kommen, wobei jeder IN-Support insbesondere durch eine Übertragungsgeschwindigkeit gekennzeichnet ist, dadurch gekennzeichnet, daß das programmierbare Interface (10) mindestens umfaßt:
- einen Kennungsschaltkreis (100), der geeignet ist, die genannten Informationen (IFj), die von den N IN-Ports (INj) kommen, zu empfangen und N einzelne, die genannten IN-Supports kennzeichnenden Kennungssignale (IDj) zu liefern,
- mindestens einen Schaltkreis (200) zum Empfang der Informationen (IFj), umfassend ein programmierbares Startbit-Steuergerät (210) zum Steuern der Übertragungsgeschwindigkeiten der genannten Informationen,
- einen Mikroprozessor (400) oder Spezialschaltkreis, der geeignet ist, einerseits die von dem Kennungsschaltkreis (100) kommenden Kennungssignale (IDj) und andererseits die von dem Empfangsschaltkreis (200) kommenden Informationen (IFj) zu empfangen, wobei dieser Mikroprozessor (400) Programmiervorrichtungen (500) steuert, die dem programmierbaren Startbit-Steuergerät (210) die IN-Supports (STPj) kennzeichnende Bit-oder Raster-Steuerparameter (PAj1, PAj2) liefern.

2. Programmierbares Interface nach Anspruch 1, dadurch gekennzeichnet, daß die Programmierungsvorrichtungen einen Steuerspeicher (500) mit N Speicherzonen umfassen, welche die Bit-Steuerparameter (PAj1, PAj2), die die Datenübertragungssupports (SPTj, SPTk) kennzeichnen, enthalten, und wobei der Steuerspeicher (500) geeignet ist, von dem Mikroprozessor (400) N Selektionssignale (SSj) der Speicherzonen zu empfangen und die Bit- oder Raster-Steuerparameter an das programmierbare Startbit-Steuergerät (210) zu liefern.

3. Programmierbares Interface nach einem der Ansprüche 1 oder 2, dadurch gekennzeichnet, daß das Interface auch einen Ausgabeschaltkreis (300) für die von dem Mikroprozessor (400) gelieferten Steuerbefehle (OCK) umfaßt, der ein programmierbares Ausgangsbit-Steuergerät (510) aufweist.

4. Programmierbares Interface nach den Ansprüchen 2 und 3, dadurch gekennzeichnet, daß der Steuerspeicher (500) außerdem geeignet ist, dem programmierbaren Ausgangsbit-Steuergerät (310) die Bit-Steuerparameter (PAk1, PAk2) zu liefern.

5. Programmierbares Interface nach einem der Ansprüche 2 oder 4, dadurch gekennzeichnet, daß die Bit-Steuerparameter zwei Binärworte (PAj1, PAj2, PAk1, PAk2) sind, die ein zeitliches Endbit-Steuerfenster definieren, das mit jedem der Informationsübertragungssupports verbunden ist.

6. Programmierbares Interface nach einem der Ansprüche 1 bis 5, dadurch gekennzeichnet, daß der Empfangsschaltkreis (200) und der ausgabeschaltkreis (300) jeweils einen Schaltkreis zum Erfassen einer Kollision (230, 330) aufweisen.

7. Programmierbares Interface nach einem der Ansprüche 1 bis 6, dadurch gekennzeichnet, daß das Interface N Aufnahmeschaltkreise (200i, i=1,2,..,N) aufweist, die über einen N-Wege-Multiplexer (600) mit N IN-Ports (INj) verbunden sind.

## Claims

1. Programmable interface (10) designed to receive, at N input ports (INj, J-1,2,...,N), information (IFj) coming from N distinct information transmission input media (SPTj), each input medium notably being characterised by a transmission speed, characterised in that the said programmable interface (10) comprises at least:
- one identification circuit (100) suitable for receiving the said information (IFj) coming from the said N input ports (INj), and for supplying N distinct identification signals (IDj) characteristic of the said input media,
- at least one circuit (200) for receiving the said information (IFj), comprising a programmable input bit monitor (210), for monitoring the transmission speeds of the said information,
- a microprocessor (400) or dedicated circuit suitable for receiving, on the one hand, the said identification signals (IDj) originating from the identification circuit (100) and, on the other hand, the information (IFj) originating from the reception circuit (200), the said microprocessor (400) controlling programming means (500) supplying to the said programmable input bit monitor (210) bit-monitoring parameters (PAj1, PAj2), or frame-monitoring parameters characteristic of the said input media (STPj).

2. Programmable interface according to Claim 1, characterised in that the said programming means comprise a monitoring memory (500) having N memory areas containing the said bit-monitoring parameters (PAj1, PAj2) characteristic of the said information transmission media (SPTj, SPTk), and the said monitoring memory (500) being suitable for receiving, from the said microprocessor (400) N selection signals (SSj) for the said memory areas and supplying to the said programmable input bit monitor (210) the said bit- or frame-monitoring parameters.

3. Programmable interface according one of Claims 1 or 2, characterised in that the said interface also includes a circuit (300) for transmitting control instructions (OCK) supplied by the microprocessor (400) comprising a programmable output bit monitor (510).

4. Programmable interface according to Claims 2 and 3, characterised in that the said monitoring memory (500) is also suitable for supplying the said bit-monitoring parameters (PAk1, PAk2) to the output bit monitor (310).

5. Programmable interface according to one of Claims 2 or 4, characterised in that the said bit-monitoring parameters are two binary words (PAj1, PAj2, PAk1, PAk2) defining an end-of-bit monitoring time window associated with each of the said information transmission media.

6. Programmable interface according to any one of Claims 1 to 5, characterised in that the said reception (200) and transmission (300) circuits each include a collision detection circuit (230, 330).

7. Programmable interface according to any one of Claims 1 to 6, characterised in that the said interface comprises N reception circuits (200i, i=1,2,..N), connected to the N input ports (INj) by a multiplexer (600) with N channels.
